# EUROPÄISCHE PATENTSCHRIFT

(11) **EP 0 595 253 B1**
(45) Veröffentlichungstag und Bekanntmachung des Hinweises auf die Patenterteilung: **23.08.1995**
(21) Anmeldenummer: 93117309.0
(22) Anmeldetag: 26.10.1993
(51) Int. Cl.: B23K 26/08

(54) **Vorrichtung zum fliegenden Schneiden von dünnschichtigem Material durch Laserstrahlung**
Device for fly cutting of fine material by laser irradition
Dispositif volant pour couper de la matière de faible épaisseur avec rayonnement du laser

(30) Priorität: 26.10.1992 DE 4235863
(43) Veröffentlichungstag der Anmeldung: 04.05.1994
(73) Patentinhaber: HEINRICH GEORG GmbH Maschinenfabrik, D-57223 Kreuztal (DE)
(72) Erfinder: Petring, Dirk, NL-6462 Kerkrade (NL); Gillner, Arnold, D-52076 Aachen (DE); Preissig, Kai-Uwe, D-52074 Aachen (DE); Bingener, Dieter F., D-57223 Kreuztal (DE)
(74) Vertreter: Pürckhauer, Rolf, Dipl.-Ing.

(56) Entgegenhaltungen:
- EP-A- 0 224 113
- PATENT ABSTRACTS OF JAPAN vol. 007, no. 116 (M-216) 20. Mai 1983 & JP-A-58 035 089 (AIDA ENGENEERING KK) 1. März 1983

## Beschreibung

Die Erfindung bezieht sich auf eine Vorrichtung zum fliegenden Schneiden von dünnschichtigem Material, das vom Coil abgewickelt wird, durch Laserstrahlung, insbesondere von Metallbändern, Geweben, Kunststoffen, Papier, Karton und Verbundwerkstoffen, die eine winklig zur Laufrichtung des Bandes angeordnete Traverse aufweist (siehe EP-A-224 113).

Zum Querteilen von Bändern werden im allgemeinen mechanische Trennvorrichtungen verwendet. Diese Scheren haben jedoch den Nachteil, daß während des eigentlichen Schneidvorgangs das Band angehalten werden muß. Dadurch werden die Leerlaufzeiten der Scheren groß, was sich dann negativ auf die Kosten eines jeweils geschnittenen Bandteilstücks auswirkt.

Es gibt jedoch auch zum Schneiden von Blechen Anlagen, bei denen "fliegende Scheren" verwendet werden, die ein Quertrennen von bandförmigem Material ermöglichen, ohne daß das Bandmaterial angehalten werden muß. Bei solchen fliegenden Scheren müssen jedoch relativ große Massen beschleunigt und verzögert werden, so daß hohe Bandgeschwindigkeiten kaum möglich sind.

Es sind aber auch schon erfolgreiche Versuche zum Längsschneiden von Feinblechen mittels Laserstrahl unternommen worden, bei denen sehr hohe Schneidgeschwindigkeiten erreicht wurden.

Der Erfindung liegt die Aufgabe zugrunde, eine Vorrichtung der eingangs genannten Gattung so auszubilden, daß beim Querschneiden der Bandteilstücke eine große Schnittgenauigkeit, und vor allem eine hohe Qualität der Schnittkanten beliebiger Kontur bei hoher Schneidgeschwindigkeit erreicht werden, ohne daß die Anlage bzw. das Band angehalten werden muß und ohne daß große Massen bewegt werden müssen.

Diese Aufgabe wird erfindungsgemäß durch die Merkmale des Kennzeichnungsteils des Patentanspruchs 1 gelöst.

Zweckmäßige Weiterbildungen der Erfindung sind den Unteransprüchen zu entnehmen.

Bei der erfindungsgemäßen Vorrichtung ist ein genaues programmgesteuertes Querteilen (Ablängen) von Werkstoffbahnen möglich, ohne daß die Anlage zum Schneiden der Teilstücke angehalten werden muß, wobei auch die Geschwindigkeiten sehr hoch sein können, da im Bereich der Traverse für das Verfahren der Laser-Schneidköpfe auch keine hohen Massen bewegt werden müssen. Die Geschwindigkeiten richten sich allerdings auch nach dem Winkel der schräg zur Laufrichtung des Bandes bzw. der Werkstoffbahn angeordneten Traverse.

Durch die Programmsteuerung sind viele beliebige Schnittkonturen in Längs- und Querrichtung möglich. Die Laserstrahlung gewährleistet gratarme bis sogar gratfreie Schnittkanten. Es tritt keinerlei mechanische Kraftaufwendung an den Schnittkanten auf und nur äußerst geringe Deformationen bzw. Änderungen der kristallinen Struktur im Schnittkantenbereich. Weiter sind keine Werkzeugwechsel, wie beispielsweise der Messerwechsel bei mechanischen Scheren, erforderlich. Durch die programmgesteuerte und automatische Einstellung der Laser-Schneidköpfe werden die Rüstzeiten auf ein Minimum reduziert.

Ein Ausführungsbeispiel der Erfindung ist in der Zeichnung schematisch vereinfacht dargestellt. Dabei zeigt
- Fig. 1: eine Draufsicht der Vorrichtung,
- Fig. 2: einen Schnitt nach der Linie II-II in Fig. 1 in Betriebsstellung und
- Fig. 3: ein Ablaufschema des Ausführungsbeispiels.

Eine Vorrichtung 1 zum fliegenden Schneiden von dünnschichtigem Material, das vom Coil abgewickelt wird, ist an einer Quer- und Längstrennanlage angeordnet. Die Trennung des Materials, wie beispielsweise Metallbänder, Gewebe, Kunststoffe, Papier, Karton und Verbundwerkstoffen geschieht durch Laserstrahlung.

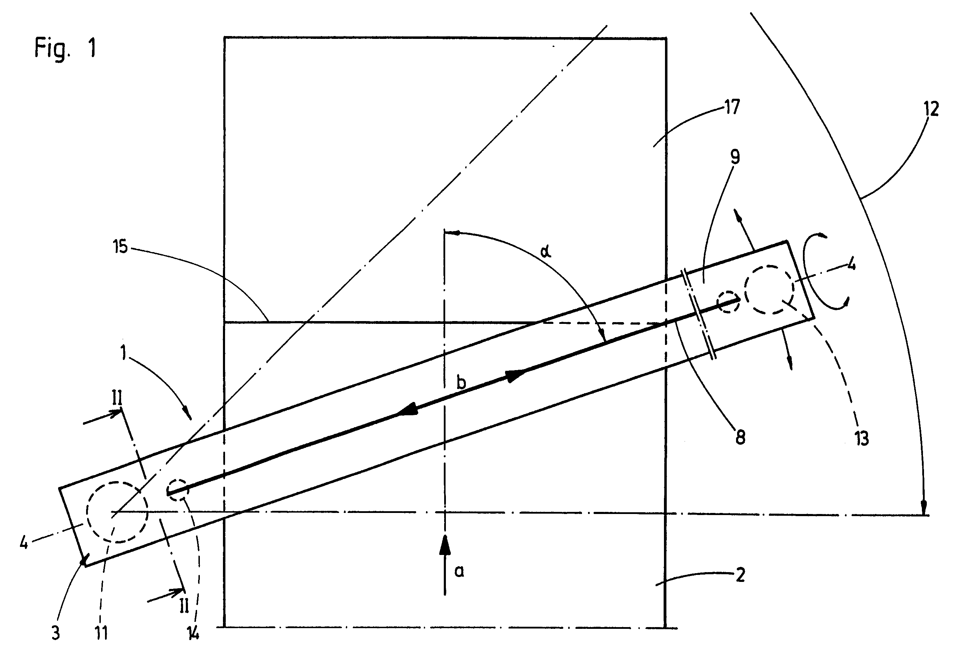

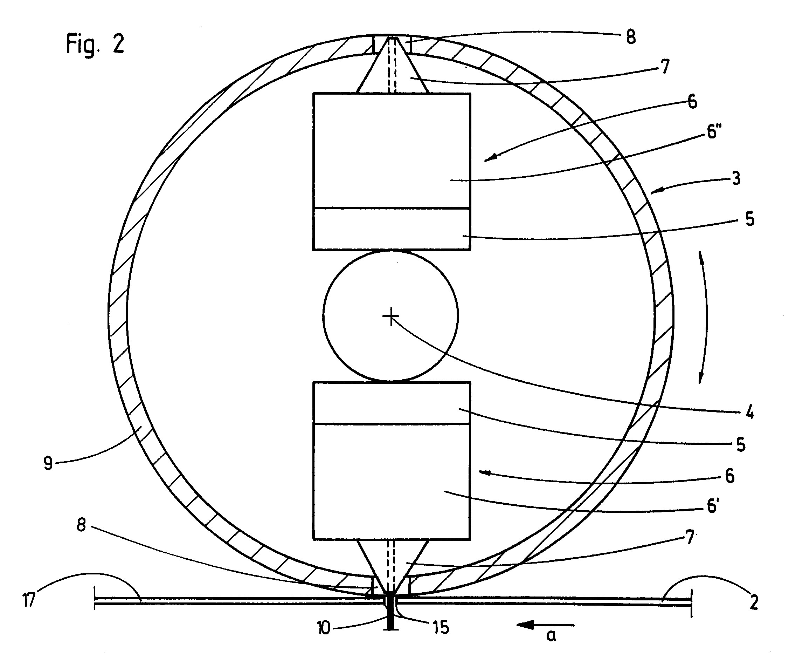

Die Vorrichtung 1 besteht, wie in Fig. 1 und 2 dargestellt, aus einer winklig zur Laufrichtung a des Bandes 2 angeordneten Traverse 3, die um ihre Längsmittelachse 4 schwenkbar gelagert und angetrieben ist. Parallel zur Längsmittelachse 4 der Traverse 3 sind sich gegenüberliegende Führungen 5 für zwei getrennt betreibbare Laser-Schneidköpfe 6 mit Düsen 7 befestigt. Die Laser-Schneidköpfe 6 sind über die Führungen 5 jeweils getrennt bzw.einzeln vorwärts oder rückwärts verfahrbar, wobei die Düsen 7 der beiden Laser-Schneidköpfe 6 voneinander abgewandt, d.h. um 180° versetzt, angeordnet sind. Dabei ragen die Laser-Schneidköpfe 6 mit ihren Düsen 7 durch in Längsrichtung b verlaufende Schlitze 8 in einem Außengehäuse 9 der Traverse 3, damit der Laserstrahl 10 nahe genug an das Schneidgut bzw. das Band 2 herangeführt werden kann.

In der Traverse 3 der Vorrichtung 1 können auch mehr als zwei getrennt betreibbare Laser-Schneidköpfe 6 mit Düsen 7 in gleichen Winkelabständen um die Längsmittelachse 4 der Traverse 3 herum angeordnet sein (nicht dargestellt). Die Winkelabstände betragen beispielsweise bei drei Laser-Schneidköpfen 6 120° und bei vier Laser-Schneidköpfen 6 90°. Durch diese Anordnung ist es möglich, die Geschwindigkeit weiter zu erhöhen, da für eine Drehung von 120° oder sogar 90° weniger Zeit notwendig ist, als für eine Drehung von 180°. Die Laser-Schneidköpfe 6 sind auch bei diesem Ausführungsbeispiel über die Führungen 5 jeweils getrennt bzw. einzeln vorwärts und rückwärts verfahrbar und die Düsen 7 der Laser-Schneidköpfe 6 ragen ebenfalls durch entsprechend angeordnete, in Längsrichtung b verlaufende Schlitze 8 im Außengehäuse 9 der Traverse 3.

Auch können auf jeder Führung 5 mehrere Laser-Schneidköpfe 6 mit Düsen 7 angeordnet sein, die in Längsrichtung b der Traverse 3 jeweils getrennt bzw. einzeln vorwärts und rückwärts verfahrbar sind (nicht dargestellt).

Die Vorrichtung 1 weist einseitig einen Ständer 11 auf, an dem die Traverse 3 zur Einstellung des Winkels α zwischen Traverse 3 und Laufrichtung a des Bandes 2 schwenkbar gelagert ist. Der Verstellbereich 12 des Winkels α liegt zweckmäßig zwischen 90° und 45° zur Laufrichtung a des Bandes. Die Wahl eines größeren Winkels α ist nicht zweckmäßig, da der Weg, den der jeweilige Laser-Schneidkopf 6 beschreiten muß, dadurch zu lang und somit die Arbeitsgeschwindigkeit wieder herabgesetzt würde. Der jeweilig zu wählende Winkel α ist den Erfordernissen beim Schneiden anzupassen, d.h. er ist von der Größe (Länge L x Breite B) des Schneidgutes und von der eingestellten Vorschubgeschwindigkeit des Bandes 2 abhängig.

Die Vorrichtung 1 kann auf der dem Ständer 11 gegenüberliegenden Seite des Bandes 2 für die Traverse 3 eine zusätzliche Stütze 13 aufweisen, die mit der Traverse 3 verstellbar gelagert ist. Bei einem fest eingestellten Winkel α ist die Stütze 13 fest montiert.

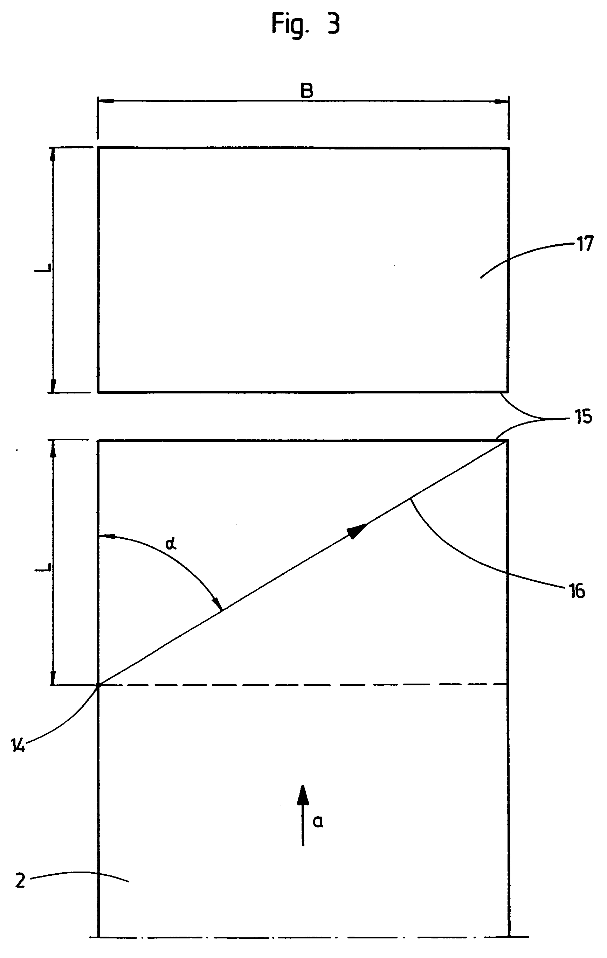

In Fig. 3 ist ein Ablaufschema des Ausführungsbeispiels dargestellt. Dabei fährt während des Schnittes der untere Laser-Schneidkopf 6' direkt oberhalb des Schneidgutes bzw. des Bandes 2 und trennt dieses. Gleichzeitig wird der obere Laser-Schneidkopf 6'' in die Startposition 14 gefahren. Nach Beendigung des Trennvorganges wird der Laserstrahl 10 aus dem unteren Laser-Schneidkopf 6'' ausgekoppelt, die Gasversorgung umgeschaltet, und die Traverse 3 dreht sich, so daß der obere Laser-Schneidkopf 6'' in die Arbeitsposition gelangt. Anschließend kann sofort ein neuer Schneidvorgang beginnen.

Die Lage der Schnittkante 15 ist eine Resultierende 16 aus den Bewegungen des Schneidgutes bzw. des Bandes 2 und des in Arbeitsposition befindlichen Laser-Schneidkopfes 6. Hierbei übernimmt eine der Achsen, d.h. der Bandlauf oder der Laser-Lauf die Master-Funktion, bei der die Geschwindigkeit variabel wählbar ist und die andere die Slave-Funktion, die der Master-Funktion automatisch angepaßt wird und dieser folgen muß. Ergänzend kann der Winkel α der Traverse 3 verändert werden.

Durch Änderung bzw.Anpassung der Parameter Vorschubgeschwindigkeit Schneidgut bzw. Band 2, Vorschubgeschwindigkeit Laser-Schneidkopf 6 und Winkel α der Traverse zum Schneidgut bzw. Band 2 können Abschnittlänge und Kontur eines oder mehrerer Bandteilstücke 17 bestimmt werden.

Für das Längsteilen der Bänder 2 kann ein Schneidgerüst (nicht dargestellt) in Laufrichtung a des Bandes 2 vor der Vorrichtung 1 angeordnet sein, wobei im Schneidgerüst eine der Schnittzahl entsprechende Anzahl von Laser-Schneidköpfen 6 vorgesehen ist. Durch programmierbare Stellantriebe der Laser-Schneidköpfe 6 kann hierdurch jede gewünschte Bandbreite und Kontur hergestellt werden.

## Patentansprüche

1. Vorrichtung zum fliegenden Schneiden von dünnschichtigem Material, das vom Coil abgewickelt wird, durch Laserstrahlung, insbesondere von Metallbändern, Geweben, Kunststoffen, Papier, Karton und Verbundwerkstoffen, die eine winklig zur Laufrichtung (a) des Bandes (2) angeordnete Traverse (3) aufweist, dadurch gekennzeichnet, daß die Traverse (3) um ihre Längsmittelachse (4) drehbar gelagert und angetrieben ist, daß parallel zur Längsmittelachse (4) der Traverse (3) sich gegenüberliegende Führungen (5) für zwei getrennt betreibbare Laser-Schneidköpfe (6) mit Düsen (7) befestigt sind, die am Umfang der Führungen (5) angeordnet sind, daß die Laser-Schneidköpfe (6) über die Führungen (5) jeweils getrennt bzw. einzeln verfahrbar sind, daß die Düsen (7) der beiden Laser-Schneidköpfe (6) voneinander abgewandt angeordnet sind und durch längsverlaufende Schlitze (8) in einem Außengehäuse (9) der Traverse (3) ragen.

2. Vorrichtung nach Anspruch 1, gekennzeichnet durch mehr als zwei getrennt betreibbare Laser-Schneidköpfe (6) mit Düsen (7), die in gleichen Winkelabständen um die Längsmittelachse (4) der Traverse (3) herum angeordnet sind, wobei die Laser-Schneidköpfe (6) über die Führungen (5) jeweils getrennt bzw. einzeln verfahrbar sind und die Düsen (7) der Laser-Schneidköpfe (6) durch entsprechend angeordnete Schlitze (8) im Außengehäuse (9) der Traverse (3) ragen.

3. Vorrichtung nach Anspruch 1 oder 2, dadurch gekennzeichnet, daß auf jeder Führung (5) mehrere Laser-Schneidköpfe (6) mit Düsen (7) angeordnet sind.

4. Vorrichtung nach einem der Ansprüche 1 bis 3, dadurch gekennzeichnet, daß die Vorrichtung (1) einseitig einen Ständer (11) aufweist, an dem die Traverse (3) zur Einstellung des Winkels (α) zwischen Traverse (3) und Laufrichtung (a) des Bandes (2) schwenkbar gelagert ist.

5. Vorrichtung nach Anspruch 4, dadurch gekennzeichnet, daß der Verstellbereich (12) des Winkels (α) zwischen 90 Grad und 45 Grad liegt.

6. Vorrichtung nach einem der Ansprüche 1 bis 5, dadurch gekennzeichnet, daß für die Traverse (3) auf der dem Ständer (11) gegenüberliegenden Seite des Bandes (2) eine zusätzliche Stütze (13) vorgesehen ist.

7. Vorrichtung nach Anspruch 6, dadurch gekennzeichnet, daß die Stütze (13) mit der Traverse (3) verstellbar gelagert ist.

8. Vorrichtung nach einem der Ansprüche 1 bis 7, dadurch gekennzeichnet, daß sie einem Schneidgerüst zum Längsteilen nachgeschaltet ist, das eine der Schnittzahl entsprechende Anzahl von Laser-Schneidköpfen 6 aufweist.

## Claims

1. Device for fly cutting thin-layered material unwound from a coil by laser irradiation, in particular metal strips, fabrics, plastics, paper, cardboard and composite materials, said device having a cross bar (3) arranged at an angle to the direction of travel (a) of the strip (2), characterised in that the cross bar (3) is mounted and driven to allow rotation around its longitudinal central axis (4); that guide means (5) located opposite one another are fastened parallel to the longitudinal central axis (4) of the cross bar (3) for two laser cutting heads (6) with nozzles (7), said laser cutting heads being operable separately and arranged on the periphery of the guide means (5); that the laser cutting heads (6) may each be moved separately or individually via the guide means (5); that the nozzles (7) of the two laser cutting heads (6) are arranged to face away from one another and project through slots (8) running longitudinally in an external housing (9) of the cross bar (3).

2. Device according to Claim 1, characterised by more than two separately operable laser cutting heads (6) with nozzles (7), which are arranged at equal angular distances around the longitudinal central axis (4) of the cross bar (3), said laser cutting heads (6) each being movable separately or individually via the guide means (5) and said nozzles (7) of the laser cutting heads (6) projecting through appropriately arranged slots (8) in the external housing (9) of the cross bar (3).

3. Device according to Claim 1 or 2, characterised in that several laser cutting heads (6) with nozzles (7) are arranged on each guide means (5).

4. Device according to one of Claims 1 to 3, characterised in that on one side the device (1) has a stand (11), on which the cross bar (3) is pivotally mounted for adjustment of the angle (α) between the cross bar (3) and the direction of travel (a) of the strip (2).

5. Device according to Claim 4, characterised in that the range of adjustment (12) of the angle (α) lies between 90° and 45°.

6. Device according to one of Claims 1 to 5, characterised in that an additional support (13) is provided for the cross bar (3) on the side of the strip (2) opposite the stand (11).

7. Device according to Claim 6, characterised in that the support (13) is adjustably mounted with the cross bar (3).

8. Device according to one of Claims 1 to 7, characterised in that it is connected downline of a cutting frame for longitudinal cutting, the number of laser cutting heads (6) of which corresponds to the number of cuts.

## Revendications

1. Dispositif de découpage à la volée d'un matériau en couche mince, qui est déroulé d'une bobine, au moyen d'un faisceau laser, notamment de bandes métalliques, de tissus, de matières plastiques, de papier, de carton et de matériaux composites, qui comporte une traverse (3) disposée obliquement par rapport à la direction de déplacement (a) de la bande (2), caractérisé par le fait que la traverse (3) est montée de manière à pouvoir tourner et est entraînée autour de son axe médian longitudinal (4), et que des guides opposés (5) prévus pour des têtes de découpage à laser (6) pouvant être entraînées indépendamment, qui comportent des buses (7) et qui sont disposées sur le pourtour des guides (5), sont fixés parallèlement à l'axe médian longitudinal (4) de la traverse (3), que les têtes de coupe à laser (6) peuvent être déplacées indépendamment ou individuellement par l'intermédiaire des guides (5), et que les buses (7) des deux têtes de découpage à laser (6) sont disposées en étant tournées à l'opposé l'une de l'autre et pénètrent par des fentes longitudinales (8) ménagées dans une enveloppe extérieure (9) de la traverse (3).

2. Dispositif suivant la revendication 1, caractérisé par plus de deux têtes de découpage à laser (6) que l'on peut faire fonctionner indépendamment et comportant des buses (7), qui sont disposées à des distances angulaires identiques autour de l'axe médian longitudinal (4) de la traverse (3), les têtes de découpage à laser (6) pouvant être déplacées indépendamment ou individuellement au moyen des guides (5) et les buses (7) des têtes de découpage à laser (6) pénétrant dans des fentes (8) disposées de façon correspondante dans l'enveloppe extérieure (9) de la traverse (3).

3. Dispositif suivant la revendication 1 ou 2, caractérisé par le fait que plusieurs têtes de découpage à laser (6) équipées de buses (7) sont disposées sur chaque guide (5).

4. Dispositif suivant l'une des revendications 1 à 3, caractérisé par le fait que le dispositif (1) possède d'un côté un montant (11), sur lequel la traverse (3) est montée de manière à pouvoir basculer pour régler l'angle (a) entre la traverse (3) et la direction de circulation (a) de la bande (2).

5. Dispositif suivant la revendication 4, caractérisé par le fait que l'intervalle de réglage (12) de l'angle (a) est compris entre 90 degrés et 45 degrés.

6. Dispositif suivant l'une des revendications 1 à 5, caractérisé par le fait qu'un appui supplémentaire (13) est prévu pour la traverse (3), du côté de la bande (2) tourné à l'opposé du support (11).

7. Dispositif suivant la revendication 6, caractérisé par le fait que l'appui (13) est monté de manière à être réglable avec la traverse (3).

8. Dispositif suivant l'une des revendications 1 à 7, caractérisé par le fait qu'il est monté en aval d'une structure de coupe servant à réaliser une division longitudinale et qui possède un nombre de têtes de découpage à laser (6), qui correspond au nombre de coupes.
